# DEMANDE DE BREVET EUROPEEN

(11) **EP 4 039 086 A1**
(43) Date de publication de la demande: **10.08.2022**
(21) Numéro de dépôt: 21155835.8
(22) Date de dépôt: 08.02.2021
(51) Int. Cl.: A01K 31/16, A01K 43/00

(54) **COUVOIR CONNECTE COMPORTANT UNE PLURALITE DE DISPOSITIFS DE MANIPULATION, DE TRAITEMENT OU DE VACCINATION D'OEUFS OU DE POUSSINS**

(71) Demandeur: Ceva Santé Animale, 33500 Libourne (FR)
(72) Inventeur: NINET, Olivier, 33500 LIBOURNE (FR); BOYER, William, 33500 LIBOURNE (FR); VEYRENT, Stéphane, 33500 LIBOURNE (FR); GONZALEZ, Carlos, 33500 LIBOURNE (FR)
(74) Mandataire: Aquinov

(57) **Abrégé**

L'invention concerne un couvoir connecté (1) comprenant une pluralité de dispositifs de manipulation, de traitement ou de vaccination d'œufs ou de poussins (22, 23, 24, 25, 3, 42, 43, 44, 45, 46, 47, 5, 62, 63, 64) répartis le long d'une chaine de production, chacun des dispositifs étant un dispositif automatisé équipé d'un contrôleur programmable logique (231, 431, 451, 641) apte à produire au moins un flux de données (F23a, F23b, F23c, F23d, F43a, F43b, F43c, F43d, F43e, F43f, F45a, F45b, F45c, F45d, F45e, F64a, F64b, F64c, F64d) relatif au fonctionnement ou aux opérations dudit dispositif automatisé, caractérisé en ce qu'il comporte une unité de centralisation et de traitement de données (7) agencée pour collecter les flux de données produits par les contrôleurs programmables logiques desdits dispositifs automatisés, pour déterminer au moins un indicateur de performance (I1, I2, I3) de ladite chaine de production à partir d'un ou plusieurs desdits flux de données collectés et pour transmettre ledit indicateur de performance sur un réseau de télécommunication à destination d'un terminal distant.

## Description

L'invention concerne le domaine de la production de volaille. Plus précisément, l'invention concerne la collecte et l'analyse des données des couvoirs de volailles.

Une chaîne de production de volaille repose sur la gestion de centaines de milliers d'animaux depuis leur arrivée dans un couvoir sous forme d'oeufs jusqu'à leur départ du couvoir sous forme de poussins, cette gestion consistant en une succession d'opérations pouvant s'étendre jusqu'à trois semaines. Ces opérations sont souvent influencées par une série de variables et de facteurs fluctuants qui peuvent avoir un impact sur l'efficacité opérationnelle. L'élevage commercial d'animaux, en particulier, doit prendre en compte et tenter de contrôler des dizaines de variables pour assurer le bien-être de l'animal tout au long de ses phases de croissance. Dans le cas de l'aviculture, où un couvoir est responsable du bon développement embryonnaire jusqu'à éclosion, un contrôle efficace de différentes variables est essentiel pour la bonne santé et le bien-être des animaux.

Afin d'améliorer le bien-être des animaux dans cette chaine de production avicole, tout en permettant une production à grande échelle, les chaines de production modernes emploient une batterie d'équipements mettant en œuvre des opérations de manipulation, de traitement ou de vaccination de façon automatique.

Compte tenu de l'importance des volumes de production et de la cadence de la chaîne de production, des écarts dans les performances et donc les paramètres des différents équipements à chaque niveau de ladite chaîne de production peuvent avoir un impact énorme tant sur le bien-être des volailles le long de la chaine que sur la qualité et le rendement du couvoir. Il est ainsi nécessaire de pouvoir surveiller, en temps réel, ces paramètres, afin de pouvoir procéder à des actions correctives sur la chaine de production si cela s'avère nécessaire.

A cet effet, certains équipements sont équipés de capteurs ou d'un contrôleur programmable logique capables de produire un flux de données relatives au fonctionnement ou aux opérations réalisés par ces équipements, de sorte à pouvoir surveiller ce fonctionnement ou ces opérations. Toutefois, compte tenu du nombre d'équipements utilisés dans une chaine de production avicole et du nombre de paramètres pouvant avoir un impact sur cette chaine de production, cette solution n'est à elle seule pas suffisante. En outre, il peut être nécessaire de suivre autant les données brutes produites par les équipements que des corrélations entre différents types de données générées par un même équipement ou par des équipements différents.

Ainsi, il existe un besoin pour un solution permettant de surveiller l'ensemble d'une chaine de production avicole, à l'échelle d'un couvoir. La présente invention se place dans ce contexte, et vise à répondre à ce besoin.

A ces fins, l'invention a pour objet un couvoir connecté comprenant une pluralité de dispositifs de manipulation, de traitement ou de vaccination d'œufs ou de poussins répartis le long d'une chaine de production, chacun des dispositifs étant un dispositif automatisé équipé d'un contrôleur programmable logique apte à produire au moins un flux de données relatif au fonctionnement ou aux opérations dudit dispositif automatisé, caractérisé en ce qu'il comporte une unité de centralisation et de traitement de données agencée pour collecter les flux de données produits par les contrôleurs programmables logiques desdits dispositifs automatisés, pour déterminer au moins un indicateur de performance de ladite chaine de production à partir d'un ou plusieurs desdits flux de données collectés et pour transmettre ledit indicateur de performance sur un réseau de télécommunication à destination d'un terminal distant.

Grâce à l'invention, il est possible de collecter, au niveau d'une même unité de centralisation et de traitement, l'ensemble des données produites par les différents équipements de la chaine de production, pour ensuite déterminer en temps réel un ou plusieurs indicateurs de performance à partir d'une ou plusieurs de ces données. Ces indicateurs pourront consister en des données brutes ou en des combinaisons de données permettant de mettre en avant certaines corrélations entre ces données. Ces indicateurs peuvent ainsi donner une indication quant au bien-être de la volaille à un endroit précis de la chaine de production ou quant à la quantité de volailles viables produites en sortie de la chaine de production. Ce ou ces indicateurs peuvent alors être transmis à un terminal distant, par exemple en étant envoyés par l'unité de centralisation et de traitement à un serveur informatique distant, lequel peut alors relayer ces indicateurs vers une application informatique installée sur un téléphone intelligent d'un opérateur chargé du contrôle de la chaine de production. Cet opérateur a ainsi accès en temps réel à ces indicateurs, de sorte à pouvoir déclencher, en cas d'écart d'un de ces indicateurs, une action corrective pour ajuster un ou plusieurs paramètres d'un ou plusieurs équipements de la chaine de production.

Dans un mode de réalisation de l'invention, chaque dispositif de manipulation, de traitement ou de vaccination d'œufs ou de poussins est un dispositif choisi parmi :
a. Un dispositif d'agencement d'œufs depuis un casier sur un convoyeur ;
b. Un dispositif d'évaluation de la taille et/ou du poids d'un ou plusieurs œufs, notamment circulant sur un convoyeur ;
c. Un dispositif de détection d'œufs à l'envers, notamment circulant sur un convoyeur, et de marquage desdits œufs à l'envers;
d. Un dispositif de remplissage d'un casier avec des œufs circulant sur un convoyeur ;
e. Un dispositif d'empilage de casiers sur un chariot ;
f. Un incubateur d'œufs ou une couveuse ;
g. Un dispositif de détection d'œuf non fécondé ou contenant un embryon mort, notamment circulant sur un convoyeur et, le cas échéant, comportant un moyen de retrait de l'œuf non fécondé ou contenant un embryon mort dudit convoyeur ;
h. Un dispositif de détection du genre des embryons dans l'œuf (in ovo),
i. Un dispositif de désinfection d'œufs, notamment circulant sur un convoyeur ;
j. Un dispositif de vaccination des embryons dans les œufs (in ovo), notamment circulant sur un convoyeur;
k. Un dispositif de nettoyage d'un casier ;
l. Un dispositif d'agencement de poussins depuis un casier sur un convoyeur ;
m. Un dispositif de vaccination, par injection, de poussins, notamment circulant sur un convoyeur ;
n. un dispositif de tri par genre de poussins, notamment circulant sur un convoyeur ;
o. Un compteur de poussins, notamment circulant sur un convoyeur ;
p. Un dispositif de vaccination, par aspersion, de poussins, notamment circulant sur un convoyeur.

Dans un exemple de réalisation de l'invention, le couvoir connecté pourra comporter :
a. Une zone de réception d'œufs en provenance d'une ou plusieurs fermes, la zone de réception comportant un ou plusieurs convoyeurs, un dispositif d'agencement d'œufs depuis un casier sur l'un de ces convoyeurs, un dispositif d'évaluation de la taille et/ou du poids des œufs circulant sur l'un de ces convoyeurs, un dispositif de détection d'œufs à l'envers circulant sur l'un de ces convoyeurs, et de marquage desdits œufs à l'envers, un dispositif de remplissage d'un casier avec des œufs circulant sur l'un de ces convoyeurs, et un dispositif d'empilage de casiers sur un chariot ;
b. Un incubateur destiné à recevoir des œufs depuis la salle de réception d'œufs et équipé de moyens de régulation de la température et de l'humidité au sein de l'incubateur ;
c. Une zone de transfert d'œufs incubés vers un éclosoir, la zone de transfert comportant un ou plusieurs convoyeurs, un dispositif de désempilage de casiers remplis d'œufs depuis un chariot sur l'un de ces convoyeurs, un dispositif de détection d'œuf non fécondé ou contenant un embryon mort circulant sur l'un de ces convoyeurs et de retrait dudit œuf non fécondé ou contenant un embryon mort dudit convoyeur, un dispositif de désinfection d'œufs circulant sur l'un de ces convoyeurs, un dispositif de vaccination par injection d'un ou plusieurs vaccins aux œufs circulant sur l'un de ces convoyeurs, un dispositif de remplissage d'un casier avec des œufs circulant sur l'un de ces convoyeurs, et un dispositif d'empilage de casiers sur un chariot ;
d. Un éclosoir destiné à recevoir des œufs depuis la zone de transfert d'œufs et équipé de moyens de régulation de la température et de l'humidité au sein de l'éclosoir;
e. Une zone de départ de poussins issus de l'éclosoir, la zone de transfert comportant un ou plusieurs convoyeurs, un dispositif de désempilage de casiers remplis de poussins depuis un chariot sur l'un de ces convoyeurs, un dispositif de vaccination par injection de poussins circulant sur l'un de ces convoyeurs, un compteur de poussins circulant sur l'un de ces convoyeurs et agencé pour remplir un panier avec un nombre prédéterminé de poussins, un dispositif de vaccination par aspersion de poussins circulant sur l'un de ces convoyeurs;
f. Une zone de lavage de casier équipé d'un dispositif de désinfection et de nettoyage d'un casier.

Avantageusement, le dispositif d'agencement d'œufs depuis un casier sur un convoyeur peut être équipé de moyens de manipulations, par exemple comprenant une pluralité d'actionneurs et de ventouses, contrôlés automatiquement par un contrôleur programmable logique pour manipuler et transférer chacun un œuf stocké dans un casier vers un convoyeur. Le cas échéant, ledit contrôleur programmable logique peut être agencé pour produire un ou plusieurs flux de données relatif au nombre de casiers manipulés depuis la mise en service du dispositif ou depuis une réinitialisation des opérations du dispositif, relatif au nombre d'œufs total ou par casier transférés par le dispositif vers le convoyeur depuis la mise en service du dispositif ou depuis une réinitialisation des opérations du dispositif, relatif au nombre d'emplacements vides total ou par casier depuis la mise en service du dispositif ou depuis une réinitialisation des opérations du dispositif.

Avantageusement, le dispositif d'évaluation de la taille et/ou du poids d'un ou plusieurs œufs circulant sur un convoyeur peut être équipé de moyens, notamment mécaniques et/ou optiques, de mesures des dimensions et/ou du poids de l'œuf, contrôlés automatiquement par un contrôleur programmable logique. Le cas échéant, ledit contrôleur programmable logique peut être agencé pour produire un ou plusieurs flux de données relatif au poids ou aux dimensions de chaque œuf mesuré depuis la mise en service du dispositif ou depuis une réinitialisation des opérations du dispositif.

Avantageusement, le dispositif de détection d'œufs à l'envers circulant sur un convoyeur, et de marquage desdits œufs à l'envers peut être équipé de moyens, notamment mécaniques et/ou optiques, de détection de l'orientation des œufs sur le convoyeur et de moyens de marquage des œufs à l'envers, par exemple au moyen d'encre, lesdits moyens de détection et lesdits moyens de marquage étant contrôlés automatiquement par un contrôleur programmable logique. Le cas échéant, ledit contrôleur programmable logique peut être agencé pour produire un ou plusieurs flux de données relatif au nombre d'œufs analysés par le dispositif, total ou par casier, depuis la mise en service du dispositif ou depuis une réinitialisation des opérations du dispositif, relatif au nombre d'œufs à l'envers, total ou par casier, depuis la mise en service du dispositif ou depuis une réinitialisation des opérations du dispositif, relatif à la vitesse d'analyse du dispositif depuis la mise en service du dispositif ou depuis une réinitialisation des opérations du dispositif, relatif à un état actif ou inactif d'une alarme de fonctionnement de tout ou partie du dispositif.

Avantageusement, l'incubateur d'œufs et/ou l'éclosoir peut être équipé de moyens de mesure et de contrôle de la température, de la luminosité, de l'humidité, de la concentration d'un gaz, par exemple du dioxyde de carbone ou de dioxygène, au sein de l'incubateur et/ou de l'éclosoir, lesdits moyens de mesure et de contrôle étant contrôlés automatiquement par un contrôleur programmable logique. Le cas échéant, ledit contrôleur programmable logique peut être agencé pour produire un ou plusieurs flux de données relatif à la température, à l'humidité, à la concentration d'un gaz au sein de l'incubateur et/ou de l'éclosoir depuis la mise en service de l'incubateur et/ou de l'éclosoir ou depuis une réinitialisation des opérations de l'incubateur et/ou de l'éclosoir.

Avantageusement, le dispositif de détection d'œuf non fécondé ou d'embryon mort dans un œuf circulant sur un convoyeur et de retrait dudit œuf non fécondé dudit convoyeur est équipé de moyens, par exemple optiques, notamment pourvus d'un émetteur laser, de détection d'un état physiologique de l'œuf et de moyens mécaniques de retrait d'un œuf non fécondé ou contenant un embryon mort du convoyeur, par exemple pourvus d'une pluralité de ventouses et d'actionneurs, lesdits moyens de détections et lesdits moyens mécaniques de retrait étant contrôlés automatiquement par un contrôleur programmable logique. Le cas échéant, ledit contrôleur programmable logique peut être agencé pour produire un ou plusieurs flux de données relatif au nombre d'œufs analysés par le dispositif, total ou par casier, depuis la mise en service du dispositif ou depuis une réinitialisation des opérations du dispositif, relatif au nombre d'œufs fécondés et/ou non fécondés détectés par le dispositif, total ou par casier, depuis la mise en service du dispositif ou depuis une réinitialisation des opérations du dispositif, relatif au nombre d'œufs contenant un embryon vivant et/ou mort détectés par le dispositif, total ou par casier, depuis la mise en service du dispositif ou depuis une réinitialisation des opérations du dispositif, relatif au nombre d'œufs retirés du convoyeur par le dispositif, total ou par casier, depuis la mise en service du dispositif ou depuis une réinitialisation des opérations du dispositif, relatif à la vitesse d'analyse du dispositif depuis la mise en service du dispositif ou depuis une réinitialisation des opérations du dispositif, relatif à un état actif ou inactif d'une alarme de fonctionnement de tout ou partie du dispositif.

Avantageusement, au moins l'un ou chaque dispositif de vaccination dans les œufs ou de poussins circulant sur un convoyeur peut être équipé d'un ou plusieurs contenants de vaccin, et de moyens d'injection ou d'aspersion du vaccin, par exemple comprenant une pluralité d'aiguilles et d'actionneurs mécaniques chacun apte à introduire l'une des aiguilles dans un œuf ou un poussins et pour injecter le vaccin contenu dans le contenant dans l'œuf ou le poussin via l'aiguille, les contenants et les moyens d'injection ou d'aspersion étant contrôlés automatiquement par un contrôleur programmable logique. Le cas échéant, ledit contrôleur programmable logique peut être agencé pour produire un ou plusieurs flux de données relatif au nombre d'œufs ou de poussins vaccinés par le dispositif, total ou par casier, depuis la mise en service du dispositif ou depuis une réinitialisation des opérations du dispositif, relatif à la vitesse de vaccination du dispositif depuis la mise en service du dispositif ou depuis une réinitialisation des opérations du dispositif, relatif à un état actif ou inactif d'une alarme de fonctionnement de tout ou partie du dispositif, relatif à la quantité de vaccin restant dans le ou chaque contenant.

En outre, le contrôleur programmable logique d'un dispositif de vaccination pourra générer un flux de données spécifique à la méthode de vaccination employée par ce dispositif. Par exemple, pour un dispositif de vaccination par injection, le contrôleur programmable logique pourra générer un flux de données comprenant le nombre de cycles entre chaque entretien, la pression, le volume ou le poids de vaccin administré, la température du vaccin et la durée d'utilisation complète d'un contenant de vaccin. Par exemple, pour un dispositif de vaccination par pulvérisation, le contrôleur programmable logique pourra générer un flux de données comprenant le nombre total de cycles par session, les cycles avant maintenance, le pourcentage de cycles corrects, et le volume de vaccin administré.

Avantageusement, le compteur de poussins comporte un ou plusieurs convoyeurs de poussins, un ou plusieurs convoyeurs de paniers et des moyens de répartition d'un nombre prédéterminé de poussins circulant sur le ou les convoyeurs de poussins dans un panier circulant sur le ou les convoyeurs de paniers, les convoyeurs et les moyens de répartition étant contrôlés automatiquement par un contrôleur programmable logique. Le cas échéant, ledit contrôleur programmable logique peut être agencé pour produire un ou plusieurs flux de données relatif au nombre de paniers remplis de poussins par le compteur depuis la mise en service du compteur ou depuis une réinitialisation des opérations du compteur, relatif au nombre de poussins répartis par le compteur, total ou par casier, depuis la mise en service du compteur ou depuis une réinitialisation des opérations du compteur, relatif à la vitesse de remplissage du compteur depuis la mise en service du compteur ou depuis une réinitialisation des opérations du compteur, relatif à un état actif ou inactif d'une alarme de fonctionnement de tout ou partie du compteur.

Avantageusement, le contrôleur programmable logique de chaque dispositif automatisé pourra générer un flux de données incluant des informations d'horodatage comportant par exemple le début et la fin des opérations réalisées par ce dispositif pour un troupeau d'œufs ou de poussins, des informations d'identification comportant par exemple le nom de l'opérateur en charge du dispositif, ou un identifiant du troupeau et/ou du casier et/ou du panier contenant des œufs ou des poussins traités par ledit dispositif et/ou des informations relatives à l'environnement ou au fonctionnement du dispositif.

De préférence, chaque dispositif de manipulation, de traitement ou de vaccination d'œufs ou de poussins pourra comporter une unité de communication apte à transmettre à l'unité de centralisation et de traitement ledit flux de données produit par le contrôleur programmable logique dudit dispositif. Pour chaque dispositif automatisé, ladite unité de communication pourra être une unité de communication filaire reliée par un ou plusieurs câbles à l'unité de centralisation et de traitement. En variante, ladite unité de communication pourra être une unité de communication sans-fil apte à transmettre des trames de données selon un protocole de communication donné sur un réseau de télécommunication. Par exemple, il pourra indifféremment s'agir d'un protocole de type Wifi, de type LTE (4G ou 5G), de type Bluetooth, de type Zigbee ou encore de type LoRaWan.

Avantageusement, au moins deux unités de communication de deux dispositifs distincts sont aptes à transmettre des trames de données selon deux protocoles de communications distincts. Le cas échéant, l'unité de centralisation et de traitement est agencée pour déterminer le protocole de communication employé pour la transmission d'une trame de données qu'elle reçoit et pour extraire des données de ladite trame de données qu'elle reçoit à partir dudit protocole de communication déterminé. Par exemple, chaque dispositif automatisé peut être associé au préalable, par exemple lors de l'installation dudit dispositif automatisé dans la chaine de production, à l'unité de centralisation et de traitement en identifiant, dans une mémoire de l'unité de centralisation et de traitement, le protocole de communication employé par l'unité de communication de ce dispositif automatisé et en associant ce protocole à un identifiant de ladite unité de communication. Lors de la transmission d'une trame de données par ladite unité de communication, l'unité de communication peut être agencée pour émettre dans la trame de données son identifiant de sorte que l'unité de centralisation et de traitement puisse identifier l'unité de communication ayant émis une trame de données qu'elle reçoit et sélectionner dans sa mémoire ledit protocole de communication associé à cet identifiant pour ensuite extraire les données de cette trame de données.

Avantageusement, l'unité de centralisation et de traitement est agencée pour transmettre ledit ou chaque indicateur de performance sur le réseau de télécommunication selon un unique protocole de communication, par exemple selon un protocole MQTT (de l'anglais « Message Queuing Telemetry Transport »).

Dans un exemple de réalisation de l'invention, l'unité de communication d'au moins l'un des dispositifs de manipulation, de traitement ou de vaccination d'œufs ou de poussins est intégrée au contrôleur programmable logique dudit dispositif. Dans une variante, l'unité de communication d'au moins l'un des dispositifs de manipulation, de traitement ou de vaccination d'œufs ou de poussins est connectée au contrôleur programmable logique dudit dispositif pour lire ledit flux de données produit par ce contrôleur programmable logique.

Avantageusement, le contrôleur programmable logique de chaque dispositif automatisé est agencé pour produire automatiquement au moins un flux de données relatif au fonctionnement ou aux opérations dudit dispositif automatisé, chaque donnée dudit flux de données étant générée automatiquement par le contrôleur au cours du fonctionnement ou des opérations dudit dispositif automatisé. Par exemple, ledit contrôleur programmable logique d'un dispositif pourra produire des données d'un flux de données de façon périodique. En variante, ledit contrôleur programmable logique d'un dispositif pourra produire des données d'un flux de données automatiquement en réponse à la détection par le dispositif d'un évènement spécifique, par exemple en réponse au traitement d'un nouvel œuf, d'un nouveau poussin, d'un nouveau panier ou d'un nouveau casier ou d'un nouveau troupeau, ou en réponse à la détection d'un défaut de fonctionnement du dispositif, d'une erreur dans une opération réalisée ou devant être réalisée par le dispositif.

De façon alternative ou cumulative, au moins l'un des dispositifs automatisés pourra comporter une interface destinée à être manipulée par un opérateur, comme un clavier ou un bouton, ledit contrôleur programmable logique d'un dispositif étant agencé pour produire des données d'un flux de données en réponse à la manipulation de l'interface par l'opérateur. Avantageusement, ledit contrôleur programmable logique d'un dispositif pourra être agencé pour produire réinitialiser un flux de données, et notamment un compteur, en réponse à la manipulation de l'interface par l'opérateur.

Dans un mode de réalisation de l'invention, le couvoir comporte au moins un capteur apte à mesurer un paramètre environnemental du couvoir, l'unité de centralisation et de traitement de données étant agencée pour collecter les mesures dudit paramètre environnemental acquises par ledit capteur. Par exemple, chaque zone de la chaine de production pourra comporter un capteur ou plusieurs capteurs d'un paramètre environnemental local au niveau de cette zone. Il pourra notamment et indifféremment s'agir de l'un ou de plusieurs des capteurs suivants : un capteur de température, un capteur d'humidité, un capteur de luminosité, un capteur de concentration d'un gaz et notamment de dioxyde de carbone ou de dihydrogène. De façon alternative ou cumulative, le couvoir comporte au moins un capteur apte à identifier l'identité d'un opérateur ou à contrôler l'accès d'un opérateur à une zone du couvoir.

De préférence, l'unité de centralisation et de traitement est agencée pour mettre à jour ledit indicateur de performance de ladite chaine de production lors de la réception d'une nouvelle donnée et pour transmettre ledit indicateur de performance mis-à-jour sur ledit réseau de télécommunication à destination dudit terminal distant.

Avantageusement, l'unité de centralisation et de traitement est agencée pour déterminer ledit au moins un indicateur de performance de ladite chaine de production au moyen d'une combinaison d'au moins deux données issues d'un ou plusieurs flux de données collectés, et notamment au moyen d'une combinaison d'au moins deux données issues d'un même flux de données ou d'au moins deux flux de données distincts. On entend notamment par combinaison de données l'une des opérations suivantes ou encore une combinaison d'au moins deux des opérations suivantes : un rapport entre deux données ; une différence entre deux données, et notamment une différence entre une valeur courante et une valeur initiale ; une somme de plusieurs données, et notamment une somme de toutes les données d'un flux de données générées pendant une période donnée, la moyenne de plusieurs données, la multiplication de deux données. En variante, l'indicateur de performance pourra être déterminé au moyen de la résultante d'une opération logique opérée sur une ou plusieurs données, ou encore au moyen de la sélection d'une donnée parmi une pluralité de données, comme la sélection d'une valeur maximale ou minimale ou la sélection de la première ou de la dernière données d'un flux de données. En variante encore, l'indicateur de performance pourra être formé directement par les données brutes d'un flux de données. Le cas échéant, la détermination d'indicateurs de performance plus complexes, du type de ceux décrits ci-dessus, pourra être réalisée par un serveur informatique distant recevant ces données brutes, ces indicateurs de performance plus complexes étant ensuite transmis par le serveur distant vers le terminal.

A titre d'exemple, l'indicateur de performance pourra être l'un des indicateurs temporels suivants : un nombre d'œufs ou de poussins manipulés, traités ou vaccinés par un dispositif de la chaine de production ; un pourcentage d'œufs à l'envers détectés, un pourcentage d'œufs fécondés vaccinés ; le nombre de poussins issus de la chaine de production ; une cadence moyenne de manipulation, de traitement ou de vaccination d'un dispositif de la chaine de production ; la température minimale, maximale ou moyenne dans une zone ou une pièce de la chaine de production ; l'humidité minimale, maximale ou moyenne dans une zone ou une pièce de la chaine de production. Le cas échéant, l'indicateur de performance pourra être déterminé pour une période donnée, pour un troupeau donné, ou pour un cycle de production complet incluant plusieurs troupeaux.

Toujours à titre d'exemple, l'indicateur de performance pourra être l'un des indicateurs temporels suivants : une température de fonctionnement d'un moteur d'un dispositif de la chaine de production, une consommation de courant d'un dispositif de la chaine de production, une pression de l'air d'un actionneur pneumatique d'un dispositif de la chaine de production, le nombre de manipulations opérés par un actionneur d'un dispositif de la chaine de production.

L'invention a également pour objet un procédé de production d'une pluralité de flux de données par une pluralité de dispositifs de manipulation, de traitement ou de vaccination d'œufs ou de poussins répartis le long d'une chaine de production d'un couvoir, de collection par une unité de centralisation et de traitement desdits flux de données, de détermination d'au moins un indicateur de performance de ladite chaine de production à partir d'un ou plusieurs desdits flux de données collectés et de transmission dudit indicateur de performance sur un réseau de télécommunication à destination d'un terminal distant.

La présente invention est maintenant décrite à l'aide d'exemples uniquement illustratifs et nullement limitatifs de la portée de l'invention, et à partir des dessins annexés, dessins sur lesquels les différentes figures représentent :
[Fig. 1] représente, schématiquement et partiellement, un couvoir connecté selon un mode de réalisation de l'invention ;
[Fig. 2] représente, schématiquement et partiellement, un exemple d'interface d'une application logicielle reliée au couvoir connecté de la [Fig. 1].

Dans la description qui suit, les éléments identiques, par structure ou par fonction, apparaissant sur différentes figures conservent, sauf précision contraire, les mêmes références.

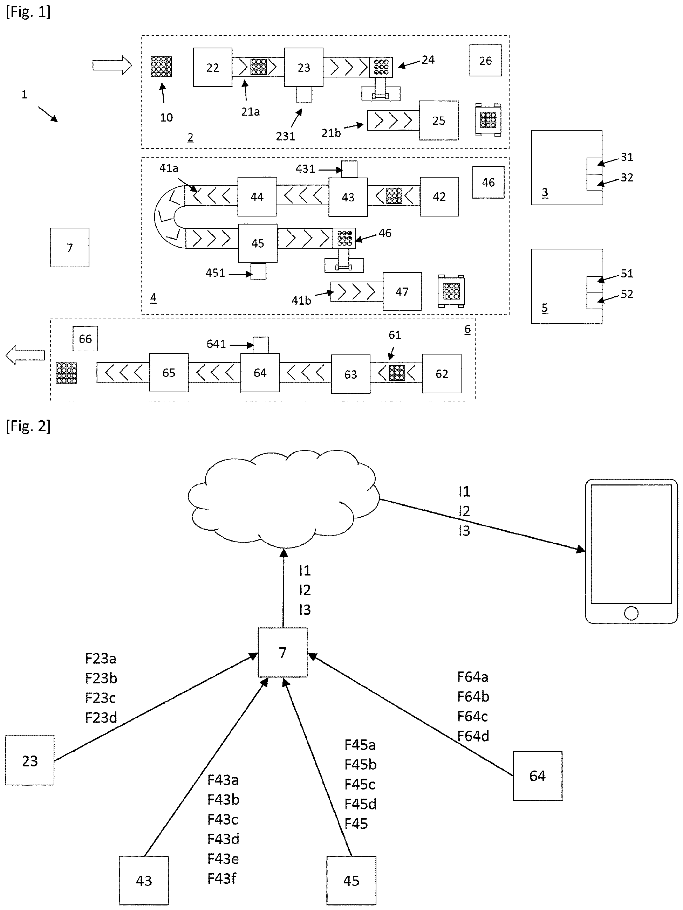

On a représenté en [Fig. 1] un couvoir connecté 1 selon un mode de réalisation de l'invention. On va décrire dans un premier temps le fonctionnement du couvoir 1 au travers de la chaine de production.

Le couvoir 1 comporte une zone de réception 2 d'œufs 10 en provenance d'une ou plusieurs fermes. Cette zone de réception 2 définit une première partie de la chaine de production et comporte deux convoyeurs 21a et 21b sur lequel circulent les œufs 10. Différents dispositifs automatisés sont disposés le long du premier convoyeur 21a de la zone 2, à savoir un dispositif 22 d'agencement d'œufs depuis un casier, un dispositif 23 de détection d'œufs à l'envers et de marquage desdits œufs à l'envers, un dispositif 24 de transfert des œufs du premier convoyeur 21a vers un casier disposé sur le deuxième convoyeur 21b et un dispositif 25 d'empilage de casiers sur un chariot.

Un troupeau d'œufs est ainsi emmené depuis une ferme à la zone de réception 1 et les œufs de ce troupeau circulent ainsi par lot sur le premier convoyeur pour y être mesurés avant d'être transférés sur des casiers sur le deuxième convoyeur, lesquels sont ainsi empilés sur un chariot.

Le chariot est ensuite transféré dans une deuxième zone formée par un incubateur 3 définissant une deuxième partie de la chaine de production. L'incubateur 3 est équipé de moyens de régulation 31 et 32 de la température et de l'humidité au sein de l'incubateur 21. Les œufs sont ainsi stockés dans l'incubateur pendant une période d'environ 20 jours, à l'issue de laquelle le chariot est transféré vers une zone de transfert 4.

La zone de transfert 4 définit une troisième partie de la chaine de production. Elle comporte deux convoyeurs 41a et 41b. Différents dispositifs automatisés sont disposés le long du premier convoyeur 41a de la zone 4, à savoir un dispositif 42 de désempilage de casiers remplis d'œufs depuis le chariot sur ce convoyeur 41a, un dispositif 43 de détection d'œufs non fécondés ou contenant un embryon mort et de retrait desdits œufs non fécondés ou contenant un embryon mort dudit convoyeur 41a, un dispositif 44 de désinfection d'œufs, un dispositif 45 de vaccination par injection d'un ou plusieurs vaccins dans les œufs, un dispositif 46 de transfert des œufs du premier convoyeur 41a vers un casier disposé sur le deuxième convoyeur 41b, et un dispositif 47 d'empilage de casiers sur un chariot.

Les œufs circulent ainsi sur le premier convoyeur pour y être triées, désinfectés et vaccinés avant d'être transférés sur des casiers sur le deuxième convoyeur, lesquels sont ainsi empilés sur un chariot.

Le chariot est ensuite transféré dans une quatrième zone formée par un éclosoir 5 définissant une quatrième partie de la chaine de production. L'éclosoir 5 est équipé de moyens de régulation 51 et 52 de la température et de l'humidité au sein de l'éclosoir 5. Les œufs sont ainsi stockés jusqu'à éclosion des poussins, pendant une période de quelques jours, à l'issue de laquelle le chariot est transféré vers une zone de de départ 6.

La zone de départ 6 définit une cinquième partie de la chaine de production. Elle comporte un convoyeur 61, le long duquel sont disposés différents dispositifs automatisés, à savoir un dispositif 62 de désempilage de casiers remplis de poussins depuis le chariot sur le convoyeur 61, un dispositif 63 de vaccination par injection de vaccin aux poussins, un compteur 64 de poussins circulant sur l'un de ces convoyeurs et agencé pour remplir un panier avec un nombre prédéterminé de poussins et un dispositif 65 de vaccination par aspersion de vaccin sur les poussins disposés dans les paniers.

Les poussins circulent ainsi sur le convoyeur pour y être vaccinés, comptés, et revaccinés avant de quitter le couvoir.

L'exemple de couvoir qui a été décrit ci-dessus n'est pas limitatif, étant entendu qu'on pourra envisager d'autres agencements, d'autres zones et d'autres types de machines sans sortir du cadre de la présente invention.

On va désormais décrire les flux de données produits par certains des dispositifs mentionnés ci-dessus. A des fins de simplifications, une partie seulement de ces dispositifs va être décrit, étant entendu que le reste des dispositifs peut également produire des flux de données.

Le dispositif 23 de détection d'œufs à l'envers est équipé de moyens de détection de l'orientation des œufs sur le convoyeur 21a et de moyens de marquage des œufs à l'envers, lesdits moyens de détections et lesdits moyens de marquage étant contrôlés automatiquement par un contrôleur programmable logique 231. Dans l'exemple décrit, les moyens de détection comportent :
a. un module de chauffage comprenant une source de lumière infrarouge configurée pour exposer un lot d'oeufs à une lumière infrarouge et créer une zone chaude dans une cellule d'air de chaque œuf,
b. un module d'imagerie avec une caméra thermique configurée pour capturer des images thermiques du lot d'œufs,
c. un module d'analyse configuré pour détecter la présence de la zone chaude dans la cellule d'air de chaque œuf à partir des images thermiques et identifier l'orientation de chaque œuf du lot d'œufs.

Les moyens de marquage comportent une pluralité de tampons, chaque tampon étant mobile verticalement et déplaçable au moyen d'un actionneur pour marquer un œuf d'un lot d'œufs, le contrôleur programmable logique 231 étant agencé pour contrôler chaque tampon en fonction des détections opérées par le module d'analyse.

Le contrôleur programmable logique 231 est ainsi agencé pour produire plusieurs flux de données, à savoir un flux de données F23a relatif au nombre d'œufs du troupeau analysés par les moyens de détection et un flux de données F23b relatif au nombre d'œufs à l'envers détectés par les moyens de détection. Chaque compteur permettant de générer ces flux de données est réinitialisé manuellement par un opérateur lorsque le dernier lot du troupeau a été analysé ou lorsqu'un nouveau troupeau doit être analysé. Chaque compteur est incrémenté du nombre d'œufs analysés ou détecté lorsqu'un lot a été analysé par les moyens de détection, une nouvelle donnée des flux F23a et F23b étant ainsi produite, sous la forme d'une valeur numérique, à la fin de l'analyse d'un lot. Le contrôleur programmable logique 231 est également agencé pour produire un flux de données F23c relatif à la vitesse d'analyse du dispositif 23, mesurée en nombres d'œufs analysés par heure, et déterminée à partir du nombre d'œufs du troupeau analysés par les moyens de détection au cours d'une fenêtre temporelle glissante, par exemple au cours des 10 dernières minutes. Une nouvelle donnée du flux F23c est ainsi produite périodiquement, sous la forme d'une valeur numérique.

Le contrôleur programmable logique 231 est encore agencé pour produire un flux de données F23d relatif à un état actif ou inactif d'une alarme de fonctionnement de tout ou partie du dispositif 23. Une nouvelle donnée du flux F23d est ainsi produite périodiquement sous la forme d'une valeur logique, la valeur logique de cette donnée étant déterminée en fonction de l'état de la ou de chaque alarme.

Le dispositif 43 de détection d'œufs non fécondés ou contenant un embryon mort et de retrait desdits œufs non fécondés ou contenant un embryon mort du convoyeur 41a, également nommé dispositif de mirage, est équipé de moyens de détection d'un état physiologique des œufs et de moyens de retrait des œufs non fécondés ou contenant un embryon mort de ce convoyeur, lesdits moyens de détections et lesdits moyens mécaniques de retrait étant contrôlés automatiquement par un contrôleur programmable logique 431. Dans l'exemple décrit, les moyens de détection comportent :
a. au moins une rangée de sources laser cohérente disposées transversalement à la direction d'avancement du convoyeur pour émettre au moins un faisceau laser vers chacun des œufs d'une même rangée d'un lot d'œufs,
b. au moins une rangée de photodiodes pour recevoir des flux lumineux provenant des œufs d'une rangée d'un lot d'oeufs ;
c. un module de traitement informatique du flux lumineux reçu par chaque photodiode pour déterminer l'état fécondé ou non-fécondé de l'œuf dont provient ce flux lumineux ou pour déterminer si l'œuf contient un embryon vivant ou mort.

Les moyens de retrait comportent une pluralité de ventouses, chaque ventouse étant mobile verticalement et déplaçable ainsi qu'actionnable au moyen d'un actionneur pour retirer un œuf d'un lot d'œufs sur le convoyeur 41a, le contrôleur programmable logique 431 étant agencé pour contrôler chaque ventouse en fonction des détections d'œufs non fécondés ou contenant un embryon mort opérées par le module de traitement.

Le contrôleur programmable logique 431 est ainsi agencé pour produire plusieurs flux de données, à savoir un flux de données F43a relatif au nombre d'œufs du troupeau analysés par les moyens de détection, un flux de données F43b relatif au nombre d'œufs fécondés et/ou contenant un embryon mort détectés par les moyens de détection, un flux de données F43c relatif au nombre d'œufs non fécondés et/ou contenant un embryon mort détectés par les moyens de détection et un flux de données F43d relatif au nombre d'œufs retirés du convoyeur 41a par les moyens de retrait. Chaque compteur permettant de générer ces flux de données est réinitialisé manuellement par un opérateur lorsque le dernier lot du troupeau a été analysé ou lorsqu'un nouveau troupeau doit être analysé. Chaque compteur est incrémenté du nombre d'œufs analysés, fécondés, non fécondés, contenant un embryon vivant, contenant un embryon mort, ou retirés, à la sortie d'un lot d'œufs du dispositif 43, une nouvelle donnée des flux F43a à F43d étant ainsi produite, sous la forme d'une valeur numérique, à cette sortie du lot. Le contrôleur programmable logique 431 est également agencé pour produire un flux de données F43e relatif à la vitesse d'analyse du dispositif 43, mesurée en nombres d'œufs analysés par heure, et déterminée à partir du nombre d'œufs du troupeau analysés par les moyens de détection au cours d'une fenêtre temporelle glissante, par exemple au cours des 10 dernières minutes. Une nouvelle donnée du flux F43e est ainsi produite périodiquement, sous la forme d'une valeur numérique.

Le contrôleur programmable logique 431 est encore agencé pour produire un flux de données F43f relatif à un état actif ou inactif d'une alarme de fonctionnement de tout ou partie du dispositif 43. Une nouvelle donnée du flux F43f est ainsi produite périodiquement sous la forme d'une valeur logique, la valeur logique de cette donnée étant déterminée en fonction de l'état de la ou de chaque alarme.

Le dispositif 45 de vaccination par injection de vaccin dans les œufs est équipé d'un contenant d'un vaccin muni d'un capteur de remplissage du contenant et de moyens d'injection du vaccin contenant dans le contenant dans des œufs sur le convoyeur 41a, ledit capteur et lesdits moyens d'injection étant contrôlés automatiquement par un contrôleur programmable logique 451. Dans l'exemple décrit, les moyens d'injection du vaccin comportent :
a. une pluralité d'injecteurs montés sur un support, munis chacun d'une ventouse et d'une aiguille,
b. un actionneur principal configuré pour déplacer le support principal dans une direction longitudinale,
c. une pluralité d'actionneurs individuels chacun couplé à un injecteur et configuré pour déplacer l'injecteur dans la direction longitudinale indépendamment des autres actionneurs.

Le contrôleur programmable logique 451 est ainsi agencé pour produire plusieurs flux de données, à savoir un flux de données F45a relatif au nombre d'œufs du troupeau vaccinés par les moyens d'injection du vaccin et un flux de données F45b relatif au nombre d'œufs vaccinés depuis une réinitialisation complète du dispositif. Chaque compteur permettant de générer ces flux de données est réinitialisé manuellement par un opérateur lorsque le dernier lot du troupeau a été analysé ou lorsqu'un nouveau troupeau doit être analysé ou encore lorsque le dispositif 45 est réinitialisé. Chaque compteur est incrémenté du nombre d'œufs d'un lot qui ont vaccinés, à la sortie d'un lot d'œufs du dispositif 45, une nouvelle donnée des flux F45a et F45b étant ainsi produite, sous la forme d'une valeur numérique, à cette sortie du lot. Le contrôleur programmable logique 451 est également agencé pour produire un flux de données F45c relatif à la vitesse de vaccination du dispositif 45, mesurée en nombres d'œufs analysés par heure, et déterminée à partir du nombre d'œufs du troupeau vaccinés par les moyens d'injections au cours d'une fenêtre temporelle glissante, par exemple au cours des 10 dernières minutes. Une nouvelle donnée du flux F45c est ainsi produite périodiquement, sous la forme d'une valeur numérique.

Le contrôleur programmable logique 451 est encore agencé pour produire un flux de données F45d relatif à un état actif ou inactif d'une alarme de fonctionnement de tout ou partie du dispositif 45 ainsi qu'un flux de données F45e relatif au niveau de remplissage du contenant de vaccin. Une nouvelle donnée du flux F45d est ainsi produite périodiquement sous la forme d'une valeur logique, la valeur logique de cette donnée étant déterminée en fonction de l'état de la ou de chaque alarme. Une nouvelle donnée du flux F45e est également produite périodiquement sous la forme d'une valeur logique, la valeur logique de cette donnée étant déterminée en fonction de la détection d'un état de remplissage « bas » du contenant ou en fonction de la détection de l'installation d'un nouveau contenant.

Le compteur de poussins 64 comporte un convoyeur de paniers et des moyens de répartition d'un nombre prédéterminé de poussins circulant sur le convoyeurs 64 dans un panier circulant sur le convoyeur de paniers, les moyens de répartition étant équipés d'une caméra et de moyens de traitement d'images acquises par la caméra agencés pour compter le nombre de poussins passant une ligne virtuelle dans cette image, les convoyeurs et les moyens de répartition étant contrôlés automatiquement par un contrôleur programmable logique 641.

Le contrôleur programmable logique 641 est ainsi agencé pour produire plusieurs flux de données, à savoir un flux de données F64a relatif au nombre de paniers remplis avec des poussins du troupeau par les moyens de répartition et un flux de données F64b relatif au nombre de poussins du troupeau comptés par les moyens de répartition. Chaque compteur permettant de générer ces flux de données est réinitialisé manuellement par un opérateur lorsque le dernier lot du troupeau a été analysé ou lorsqu'un nouveau troupeau doit être analysé. Le compteur employé pour le flux F64a est incrémenté à chaque fois qu'un panier est rempli tandis que le compteur employé pour le flux F64b est incrémenté à chaque fois qu'un poussin est compté, une nouvelle donnée de ces flux F64a et F64b étant ainsi produite, sous la forme d'une valeur numérique, lors de ces événements. Le contrôleur programmable logique 641 est également agencé pour produire un flux de données F64c relatif à la vitesse de remplissage du dispositif 64, mesurée en nombres de poussins comptés par heure, et réévaluée à chaque fois qu'un nouveau poussin est compté. Une nouvelle donnée du flux F45c est ainsi produite, sous la forme d'une valeur numérique, à chaque fois qu'un nouveau poussin est compté.

Le contrôleur programmable logique 641 est encore agencé pour produire un flux de données F64d relatif à un état actif ou inactif d'une alarme de fonctionnement de tout ou partie du dispositif 64. Une nouvelle donnée du flux F64d est ainsi produite périodiquement sous la forme d'une valeur logique, la valeur logique de cette donnée étant déterminée en fonction de l'état de la ou de chaque alarme.

Le contrôleur programmable logique de chaque dispositif automatisé pourra par ailleurs générer un flux de données incluant d'autres informations que celles décrites ci-dessus, et notamment des informations d'horodatage comportant par exemple le début et la fin des opérations réalisées par ce dispositif pour un troupeau d'œufs ou de poussins, des informations d'identification comportant par exemple le nom de l'opérateur en charge du dispositif, ou un identifiant du troupeau et/ou du casier et/ou du panier contenant des œufs ou des poussins traités par ledit dispositif et/ou des informations relatives à l'environnement ou au fonctionnement du dispositif.

Le couvoir 1 comporte par ailleurs un ensemble de capteurs 26, 48 et 66, répartis dans les zones 2, 4 et 6 et chacun apte à mesurer la température ambiante et l'humidité ambiante dans la zone dans lequel il est placé.

Afin de pouvoir surveiller l'ensemble de la chaine de production du couvoir 1, le couvoir 1 comporte une unité 7 de centralisation et de traitement de données.

Chacun des dispositifs 23, 43, 45 et 64 comporte une unité de communication apte à transmettre à l'unité 7 chacun des flux de données F23a à F23d, F43a à F43f, F45a à F45e et F64a à F64d, produit par le contrôleur programmable logique 231, 431, 451 et 641 dudit dispositif. A titre d'exemple non limitatif, l'unité de communication des dispositifs 23, 43 et 45 est intégrée au contrôleur programmable logique 231, 431 et 451 dudit dispositif tandis que l'unité de communication du dispositif 64 est connectée au contrôleur programmable logique 641 pour lire les flux de données produit par ce contrôleur programmable logique.

Dans l'exemple décrit, chacune des unités de communication est une unité de communication sans-fil apte à transmettre, selon un protocole de communication donné à l'unité 7, les flux de données produits par le contrôleur programmable logique 231, 431, 451 et 641. L'unité 7 est agencée pour déterminer le protocole de communication employé pour la transmission d'une trame de données qu'elle reçoit et pour extraire des données de ladite trame de données qu'elle reçoit à partir dudit protocole de communication déterminé. Plus précisément, l'unité 7 convertit une trame de données qu'elle reçoit en un format standard de sorte à pouvoir consolider l'ensemble des données reçues des différents dispositifs et faciliter le traitement et la combinaison de ces données entre elles.

L'unité 7 de centralisation et de traitement collecte ainsi les flux de données produits par les dispositifs 23, 43, 45 et 64 du couvoir 1 ainsi que les paramètres mesurées par les capteurs 26, 48 et 66. Elle est agencée pour déterminer, à partir des données de ces flux de données qu'elle collecte, des indicateurs de performance du couvoir 1.

Dans la suite de la description, seulement trois indicateurs seront décrits, étant entendu que d'autres indicateurs peuvent être envisagés sans sortir du cadre de la présente invention.

Comme montré en [Fig. 2], l'unité 7 va en premier lieu déterminer un premier indicateur I1, à partir des flux de données F23b et F23a. Plus précisément, l'indicateur I1 sera égal au rapport de la dernière donnée du flux F23b et de la dernière donnée du flux F23a afin d'indiquer le pourcentage courant d'œufs à l'envers dans la chaine de production. Cet indicateur I1 sera remis à jour par l'unité 7 lors de la réception d'une nouvelle donnée du flux F23a et/ou F23b.

L'unité 7 détermine également un deuxième indicateur I2, à partir des flux de données F43a et F45a. Plus précisément, l'indicateur I2 sera égal au rapport entre la somme de toutes les dernières données des flux F45a produits pour différents troupeaux sur une période de production donnée et la somme de toutes les dernières données des flux F43a produits pour différents troupeaux sur une période de production donnée, afin d'indiquer le pourcentage d'œufs fécondés vaccinés sur cette période de production. Cet indicateur I2 sera remis à jour par l'unité 7 lorsque le passage d'un nouveau troupeau sur la chaine de production sera achevé.

L'unité 7 détermine également un troisième indicateur I3, à partir du flux de données F64b. Plus précisément, l'indicateur I3 sera égal à la somme de toutes les dernières données des flux F64b produits pour différents troupeaux sur une période de production donnée, afin d'indiquer le nombre de poussins issus de la chaine de production sur cette période de production. Cet indicateur I3 sera remis à jour par l'unité 7 lorsque le passage d'un nouveau troupeau sur la chaine de production sera achevé.

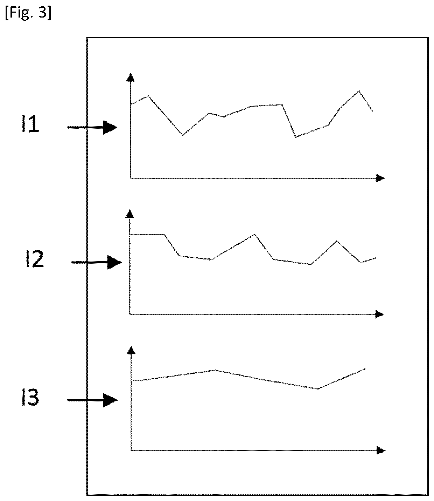

Chacun des indicateurs I1, I2 et I3, une fois déterminé ou mis à jour, est intégré dans une trame de données définie selon le protocole MQTT (de l'anglais « Message Queuing Telemetry Transport »), et transmis par une unité de communication de l'unité 7, via un réseau de télécommunication, à un serveur distant 8. Ces indicateurs I1, I2 et I3 peuvent alors être téléchargés par une application logicielle installé sur un téléphone intelligent 9, à partir duquel un superviseur de la chaine de production peut alors surveiller ces indicateurs et déclencher une action corrective si cela s'avère nécessaire. On a représenté en [Fig. 3] un exemple d'interface de cette application logicielle sur laquelle sont représentés les indicateurs I1, I2 et I3.

Dans une variante non représentée de l'invention, chaque nouvelle données des flux de données F23a à F23d, F43a à F43f, F45a à F45e et F64a à F64d pourra être transmises, sans transformation, au serveur distant, pour y être combinée avec d'autres données de sorte à définir des indicateurs de performance plus complexes ou encore pour y être directement accessible au téléphone intelligent 9, le superviseur pouvant alors définir, selon son propre choix, des indicateurs.

La description qui précède explique clairement comment l'invention permet d'atteindre les objectifs qu'elle s'est fixée, à savoir permettre la surveillance de l'ensemble d'une chaine de production avicole, à l'échelle d'un couvoir, tant au travers de données brutes produites par les équipements qu'au travers de corrélations entre différents types de données générées par un même équipement ou par des équipements différents.

En tout état de cause, l'invention ne saurait se limiter aux modes de réalisation spécifiquement décrits dans ce document, et s'étend en particulier à tous moyens équivalents et à toute combinaison techniquement opérante de ces moyens.

## Revendications

1. Couvoir connecté (1) comprenant une pluralité de dispositifs de manipulation, de traitement ou de vaccination d'œufs ou de poussins (22, 23, 24, 25, 3, 42, 43, 44, 45, 46, 47, 5, 62, 63, 64) répartis le long d'une chaine de production, chacun des dispositifs étant un dispositif automatisé équipé d'un contrôleur programmable logique (231, 431, 451, 641) apte à produire au moins un flux de données (F23a, F23b, F23c, F23d, F43a, F43b, F43c, F43d, F43e, F43f, F45a, F45b, F45c, F45d, F45e, F64a, F64b, F64c, F64d) relatif au fonctionnement ou aux opérations dudit dispositif automatisé, **caractérisé en ce qu'**il comporte une unité de centralisation et de traitement de données (7) agencée pour collecter les flux de données produits par les contrôleurs programmables logiques desdits dispositifs automatisés, pour déterminer au moins un indicateur de performance (I1, I2, I3) de ladite chaine de production à partir d'un ou plusieurs desdits flux de données collectés et pour transmettre ledit indicateur de performance sur un réseau de télécommunication à destination d'un terminal distant.

2. Couvoir connecté (1) selon la revendication précédente, **caractérisé en ce que** chaque dispositif de manipulation, de traitement ou de vaccination d'œufs ou de poussins est un dispositif choisi parmi :
a. Un dispositif (22, 42) d'agencement d'œufs depuis un casier sur un convoyeur (21a, 41a);
b. Un dispositif d'évaluation de la taille et/ou du poids d'un ou plusieurs œufs ;
c. Un dispositif (23) de détection d'œufs à l'envers, et de marquage desdits œufs à l'envers;
d. Un dispositif (24, 46) de remplissage d'un casier avec des œufs circulant sur un convoyeur ;
e. Un dispositif (25, 47) d'empilage de casiers sur un chariot ;
f. Un incubateur d'œufs (3) ou une couveuse (5) ;
g. Un dispositif (43) de détection d'œuf non fécondé ou contenant un embryon mort ;
h. Un dispositif de détection du genre des embryons dans l'œuf ;
i. Un dispositif (44) de désinfection d'œufs;
j. Un dispositif (45) de vaccination des embryons dans les œufs ;
k. Un dispositif de nettoyage d'un casier ;
l. Un dispositif (62) d'agencement de poussins depuis un casier sur un convoyeur (61) ;
m. Un dispositif (63) de vaccination, par injection, de poussins;
n. un dispositif de tri par genre de poussins;
o. Un compteur (64) de poussins circulant sur un convoyeur ;
p. Un dispositif (65) de vaccination, par aspersion, de poussins.

3. Couvoir connecté (1) selon l'une des revendications précédentes, dans lequel chaque dispositif (22, 23, 24, 25, 3, 42, 43, 44, 45, 46, 47, 5, 62, 63, 64) de manipulation, de traitement ou de vaccination d'œufs ou de poussins comporte une unité de communication apte à transmettre à l'unité de centralisation et de traitement (7) ledit flux de données (F23a, F23b, F23c, F23d, F43a, F43b, F43c, F43d, F43e, F43f, F45a, F45b, F45c, F45d, F45e, F64a, F64b, F64c, F64d) produit par le contrôleur programmable logique (231, 431, 451, 641) dudit dispositif.

4. Couvoir connecté (1) selon la revendication précédente, dans lequel au moins deux unités de communication de deux dispositifs distincts (23, 43, 45, 64) sont aptes à transmettre des trames de données selon deux protocoles de communications distincts et dans lequel l'unité de centralisation et de traitement (7) est agencée pour déterminer le protocole de communication employé pour la transmission d'une trame de données qu'elle reçoit et pour extraire des données de ladite trame de données qu'elle reçoit à partir dudit protocole de communication déterminée.

5. Couvoir connecté (1) selon la revendication précédente, dans lequel l'unité de communication d'au moins l'un des dispositifs (23, 43, 45, 64) de manipulation, de traitement ou de vaccination d'œufs ou de poussins est intégrée au contrôleur programmable logique (231, 431, 451, 641) dudit dispositif.

6. Couvoir connecté (1) selon l'une des revendications 3 et 4, dans lequel l'unité de communication d'au moins l'un des dispositifs (23, 43, 45, 64) de manipulation, de traitement ou de vaccination d'œufs ou de poussins est connectée au contrôleur programmable logique (231, 431, 451, 641) dudit dispositif pour lire ledit flux de données (F23a, F23b, F23c, F23d, F43a, F43b, F43c, F43d, F43e, F43f, F45a, F45b, F45c, F45d, F45e, F64a, F64b, F64c, F64d) produit par ce contrôleur programmable logique.

7. Couvoir connecté (1) selon l'une des revendications 3 à 5, dans lequel le contrôleur programmable logique (231, 431, 451, 641) de chaque dispositif automatisé (23, 43, 45, 64) est agencé pour produire automatiquement au moins un flux de données (F23a, F23b, F23c, F23d, F43a, F43b, F43c, F43d, F43e, F43f, F45a, F45b, F45c, F45d, F45e, F64a, F64b, F64c, F64d) relatif au fonctionnement ou aux opérations dudit dispositif automatisé, chaque donnée dudit flux de données étant générée automatiquement par le contrôleur au cours du fonctionnement ou des opérations dudit dispositif automatisé.

8. Couvoir connecté (1) selon l'une des revendications précédentes, **caractérisé en ce qu'**il comporte au moins un capteur (26, 46, 66) apte à mesurer un paramètre environnemental du couvoir, l'unité de centralisation et de traitement de données (7) étant agencée pour collecter les mesures dudit paramètre environnemental acquises par ledit capteur.

9. Couvoir connecté (1) selon l'une des revendications précédentes, dans lequel l'unité de centralisation et de traitement (7) est agencée pour mettre à jour ledit indicateur de performance (I1, I2, I3) de ladite chaine de production lors de la réception d'une nouvelle donnée et pour transmettre ledit indicateur de performance mis-à-jour sur ledit réseau de télécommunication à destination dudit terminal distant

10. Couvoir connecté (1) selon l'une des revendications précédentes, dans lequel l'unité de centralisation et de traitement (7) est agencée pour déterminer ledit au moins un indicateur de performance (I1, I2, I3) de ladite chaine de production au moyen d'une combinaison d'au moins deux données issues d'un ou plusieurs flux de données collectés (F23a, F23b, F43a, F45a, F64b).
